# EUROPEAN PATENT APPLICATION

(11) **EP 4 318 368 A1**
(43) Date of publication of application: **07.02.2024**
(21) Application number: 22774688.0
(22) Date of filing: 02.02.2022
(51) Int. Cl.: G06Q 50/10, G16Y 10/45

(54) **INFORMATION PROCESSING DEVICE, INFORMATION PROCESSING SYSTEM, INFORMATION PROCESSING METHOD, AND PROGRAM**

(30) Priority: 25.03.2021 JP 2021052161
(71) Applicant: Sato Holdings Kabushiki Kaisha, Tokyo 108-0023 (JP)
(72) Inventor: HIRATA, Kazuya, Tokyo 108-0023 (JP); UEDA, Yoshiyuki, Tokyo 108-0023 (JP)
(74) Representative: Grünecker Patent- und Rechtsanwälte PartG mbB
(86) International application number: PCT/JP2022/004030
(87) International publication number: WO 2022/201886

(57) **Abstract**

An embodiment of the present invention is an information processing device including: a storage configured to store information about a product and identification information of a radio tag that is attached to the product; and a control unit configured to, when receiving the identification information of the radio tag attached to the product, from a product recipient terminal held by a product recipient who obtains the product, associate information about the product recipient with the identification information of the radio tag. The control unit is further configured to, when the information about the product recipient is associated with the identification information of the radio tag, control so that the information about the product, which is stored in the storage, can be provided to the product recipient terminal.

## Description

### FIELD

The present invention relates to an information processing device, an information processing system, an information processing method, and a program.

### BACKGROUND

For the purpose of providing services to consumers who purchased products, various systems for registering users have been developed heretofore.

For example, a user registration device receives from a mobile terminal of a user, terminal identification information of the mobile terminal and stores this information, and it also transmits registration request information to the mobile terminal. The registration request information is information for requesting input of user information, which is information about the user. The user registration device receives from the mobile terminal, registration application information that is information containing an instruction for approving user registration and terminal identification information of the mobile terminal. In the condition in which the terminal identification information that is received is already stored, the user registration device records registration status information that shows completion of registration, in association with the terminal identification information (for example, refer to Japanese Unexamined Patent Application Publication No. 2011-197961).

### BRIEF SUMMARY

### TECHNICAL PROBLEM

A consumer may purchase and obtain a product from a product seller (e.g., a store). In this case, however, in order for the product seller to centrally manage a product recipient who obtained the product (that is, the consumer), user registration or another additional procedure should be performed by the product recipient. For example, it is not practical to perform user registration or the like each time, such as when a product recipient is changed during circulation of a product in a market, and thus, centrally managing a product recipient is difficult to achieve.

If a product recipient who obtained a product can be centrally managed, information about the product can be timely provided to the product recipient, which is beneficial for both of the product recipient and the product seller. For this reason, it is desired to develop a system that enables centrally managing a product recipient without forcing the product recipient to perform an additional procedure.

In view of the above, an object of the present invention is to enable centrally managing a product recipient while reducing a burden of a procedure on the product recipient.

### SOLUTION TO PROBLEM

One aspect of the present invention provides an information processing terminal including a storage and a control unit. The storage is configured to store information about a product and identification information of a radio tag that is attached to the product. The control unit is configured to, when receiving the identification information of the radio tag attached to the product, from a product recipient terminal held by a product recipient who obtains the product, associate information about the product recipient with the identification information of the radio tag. The control unit is further configured to, when the information about the product recipient is associated with the identification information of the radio tag, control so that the information about the product, which is stored in the storage, can be provided to the product recipient terminal.

### ADVANTAGEOUS EFFECTS

In the one aspect of the present invention, it is possible to centrally manage a product recipient while reducing a burden of a procedure on the product recipient.

### BRIEF DESCRIPTION OF DRAWINGS

FIG. 1 schematically shows a configuration of an e-commerce sales system of one embodiment.
FIG. 2 shows an example of data components of a tag database.
FIG. 3 shows an example of data components of a membership database.
FIG. 4 shows an example of data components of a product database.
FIG. 5 shows an example of data components of a product order database.
FIG. 6 shows flows of sale and return of a product in the e-commerce sales system of the one embodiment.
FIG. 7 is a block diagram schematically showing an internal configuration of the e-commerce sales system of the one embodiment.
FIG. 8 shows a structure of an advertising packet that is transmitted from an IoT tag.
FIG. 9 is a sequence chart showing processing related to shipping a product to a customer in the e-commerce sales system of the one embodiment.
FIG. 10 is a sequence chart showing processing related to returning a product to an e-commerce company in the e-commerce sales system of the one embodiment.
FIG. 11 is a sequence chart showing management of tag information in the e-commerce sales system of the one embodiment.
FIG. 12 is a sequence chart showing processing for providing product contents in the e-commerce sales system of the one embodiment.

### DETAILED DESCRIPTION

In this disclosure, a "radio tag" is an electronic tag to be attached to a product. A radio tag is configured so that information stored therein can be read from an external communication device by wireless communication. A battery may or may not be incorporated in the radio tag. A communication protocol and a communication capability range between a radio tag and an external communication device are not limited, and they can be changed or adjusted as appropriate in accordance with the application.

In this disclosure, a state in which "communication is capable" is not limited to a state in which direct communication can be performed, and it also includes a state in which indirect communication can be performed. For example, a state in which "an "A" device and a "C" device are capable of communicating with each other" is not limited to a state in which the "A" device and the "C" device establish a direct communication to transmit and receive data with each other. This state may also include a state in which the "A" device and the "C" device transmit and receive data with each other via a "B" device.

Hereinafter, an e-commerce sales system 1 of one embodiment of an information processing system will be described with reference to the drawings. An e-commerce sale is a selling style using electronic commerce (EC; E-Commerce).

In the e-commerce sales system 1, for example, a customer accesses a website of an e-commerce company to order a product by using an e-commerce application program (hereinafter referred to as an "e-commerce application" as appropriate) or the like installed in a customer terminal. The type of products is not limited, but the following description assumes apparel items in which clothes and the like are main products.

The customer registers as a member (as a user or the like) in order to use the e-commerce application. If the customer is not satisfied with a product that is delivered from the e-commerce company, it is possible to return the product to the e-commerce company. In one case, a product, such as an apparel item, can be returned through, for example, a laundry shop (an example of an intermediary). Herein, the customer is not required to fill out a return form or the like, but for example, the customer only needs to designate a laundry shop through which a product is returned, on the e-commerce application. This does not require the customer to perform complicated work in returning the product that is purchased by e-commerce.

In the e-commerce sales system 1, an Internet of Things (IoT) tag is attached to a product to be sold. The IoT tag (hereinafter simply referred to as a "tag" as appropriate) is an example of a radio tag, and, for example, it is an energy harvesting device that operates by obtaining energy from radio waves in the surrounding environment and thereby has no battery. This tag can operate semi-permanently although not having a battery.

In one embodiment, the tag is configured to perform a wireless communication with low consumption of power. Examples of a communication protocol include Bluetooth (registered trademark) Low Energy (hereinafter abbreviated as "BLE"), Bluetooth (registered trademark), and ZigBee (registered trademark). The following describes an example of a case of performing a BLE communication.

The tag that supports the BLE standard performs a broadcast communication. Specifically, the tag broadcasts an advertising packet (described later). This broadcast communication is configured to perform one-way data transmission from the tag to a surrounding BLE-based reception terminal (e.g., a customer terminal or a laundry shop terminal which will be described later). Each tag transmits a packet that contains a tag ID, which is identification information unique to a corresponding tag.

In a situation of selling a product in the e-commerce sales system 1, it is preferable to enable clearly recognizing a product management responsible member until the product is delivered from an e-commerce company to a customer (that is, the e-commerce company) and a product management responsible member after the product is delivered to the customer (that is, the customer). Similarly, in returning a product, it is preferable to enable clearly recognizing the following management responsible members: for example, a product management responsible member until the product is delivered from a customer to a laundry shop or another intermediary (that is, the customer), a product management responsible member while the product is temporarily stored in the laundry shop or the like (that is, the laundry shop), and a responsible member until the product is returned from the laundry shop to an e-commerce company (e.g., a transportation company). From this point of view, in the e-commerce sales system 1, a tag management server centrally manages a product management responsible member as a product recipient, based on a tag attached to a product. The tag management server centrally manages information about a product recipient (e.g., an e-commerce company, a customer, or a laundry shop) and a tag ID that is identification information unique to a tag, in a tag database (described later).

The tag database manages the product management responsible member as a "PRODUCT RECIPIENT."

In one embodiment, product contents and so on are provided, for example, to a product recipient of a product, as information about the product. Specifically, control is performed so that a product recipient of a product can access product contents corresponding to the product and that a person other than the product recipient cannot access the product recipient. With this system, after a customer purchased a product, attractive information about the product, or the like, can be provided to the customer at a desired timing.

In one embodiment, information about a product recipient of a product, and a tag ID of a tag attached to the product, are recorded on a server. In one example, due to a product information request (described later), a customer terminal of a customer communicates with a tag that is attached to a product, to obtain a tag ID of the tag. Then, information about this customer and the tag ID that is obtained by the customer terminal are checked against data recorded in the server, whereby it is determined whether this customer is a product recipient. Thus, control is performed so that product contents corresponding to a certain product, can be provided to the customer who is a product recipient of the product.

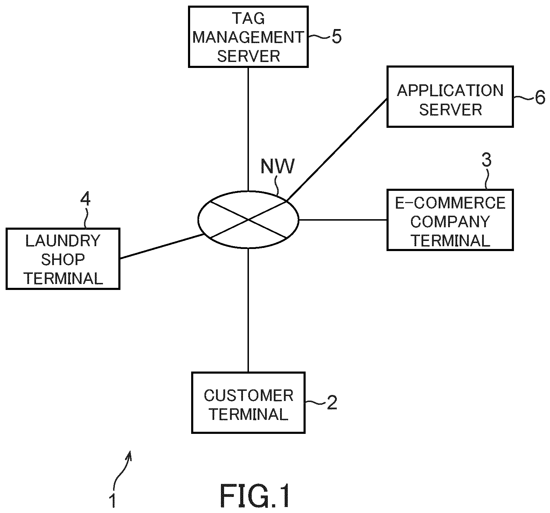

A system configuration of the e-commerce sales system 1 of the one embodiment and specific flows of sale and return of a product by e-commerce will be described with reference to FIGs. 1 to 6.

As shown in FIG. 1, in the e-commerce sales system 1, a customer terminal 2 (an example of a product recipient terminal), an e-commerce company terminal 3 (an example of a product seller terminal), a laundry shop terminal 4 (an example of an intermediary terminal), a tag management server 5, and an application server 6 are capable of communicating with one another via a network NW. The network NW is a local area network (LAN), a mobile telecommunication network, the Internet, or the like, or a combination of two or more thereof.

The tag management server 5 and the application server 6 constitute an exemplary information processing device.

The customer terminal 2 is a terminal held by a customer, and non-limiting examples of the customer terminal 2 include a laptop personal computer, a tablet terminal, and a smartphone. The customer is registered as a member of an e-commerce company in a membership database (described later).

The e-commerce company terminal 3 is a terminal held by a person in charge of shipping products and receiving returned products (e.g., a person in charge of a warehouse) of an e-commerce company. Non-limiting examples of the e-commerce company terminal 3 include a laptop personal computer, a tablet terminal, and a smartphone.

The laundry shop terminal 4 is a terminal held by a person in charge of a laundry shop that is an intermediary for returning a product from a customer to an e-commerce company. Non-limiting examples of the laundry shop terminal 4 include a laptop personal computer, a tablet terminal, and a smartphone.

The customer terminal 2, the e-commerce company terminal 3, and the laundry shop terminal 4 are installed with an e-commerce application, as described above. The e-commerce application is an application for executing various processes related to e-commerce sale operated by an e-commerce company, such as ordering for a product and returning of a product. The e-commerce application receives a packet from a tag around each terminal and transmits a tag ID that is contained in the packet, to the application server 6.

The tag management server 5 is a server that manages a tag attached to a product sold by an e-commerce company. As described above, for the purpose of clarifying a product management responsible member, the tag management server 5 has a tag database in which information about a product recipient (e.g., an e-commerce company, a customer, or a laundry shop) and a tag ID that is identification information unique to a tag, are associated with each other.

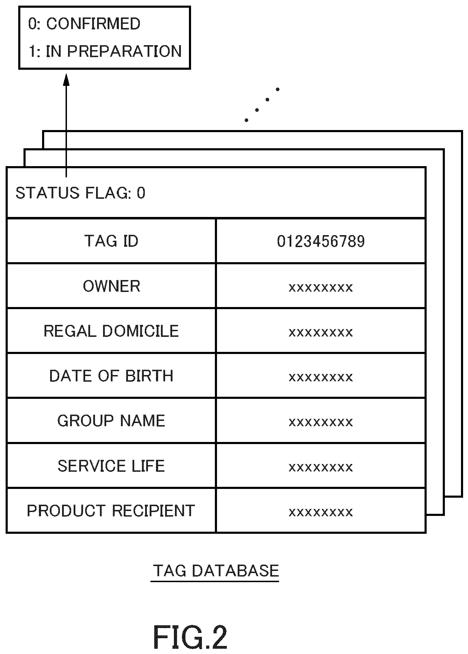

FIG. 2 shows an example of data components of the tag database.

As shown in FIG. 2, in the tag database, at least a "TAG ID" and a "PRODUCT RECIPIENT," who is a product management responsible member, are associated with each other. The tag database shown in FIG. 2 contains, in addition to a tag ID and a product recipient, a value of each field of "OWNER," "LEGAL DOMICILE," "DATE OF BIRTH," "GROUP NAME," and "SERVICE LIFE." Each value is input in advance, for example, by an e-commerce company or a product manufacturer. In one embodiment, in accordance with transfer of a product, the value in the "PRODUCT RECIPIENT" field is rewritten as appropriate. Information containing a value of each field with respect to each tag ID in the tag database is referred to as "tag information."

In the tag database, a status flag is set per tag ID. This status flag shows whether the product recipient of a product that is attached with a corresponding tag is confirmed.

In one example, although actually still not obtaining a product, a person who is to receive the product may be determined. In a case of delivering a product from an e-commerce company to a customer, at the time of reception of an order for the product from the customer, delivery of the product, which is attached with a tag of a certain tag ID, to the customer is determined, but the customer is not a product recipient until actually receiving the product. Thus, the product recipient of the tag information is rewritten to a member code of the customer at the time of reception of the order for the product, but the status flag of the tag information is set to "1" (in preparation) until the product actually reaches the customer. After it is confirmed that the product has actually reached the customer, the status flag of the tag information is set to "0" (confirmed).

Similarly, in a case of returning a product from a customer to an e-commerce company through a laundry shop, delivery of the product, which is attached with a tag of a certain tag ID, to the laundry shop is determined at the time of reception of a product return request designating the laundry shop to be used in returning. However, the laundry shop is not a product recipient until actually receiving the product. Thus, the product recipient of the tag information is rewritten to a member code of the laundry shop at the time of reception of the product return request designating the laundry shop, but the status flag of the tag information is set to "1" (in preparation) until the product actually reaches the laundry shop. After it is confirmed that the product has actually reached the laundry shop, the status flag of the tag information is set to "0" (confirmed).

The application server 6 provides various services to the e-commerce application of each of the customer terminal 2, the e-commerce company terminal 3, and the laundry shop terminal 4.

For example, the application server 6 receives an order for a product that is available from an e-commerce company, from the customer terminal 2, and it processes this order. The application server 6 also receives a product return request from the customer terminal 2 and processes this product return request.

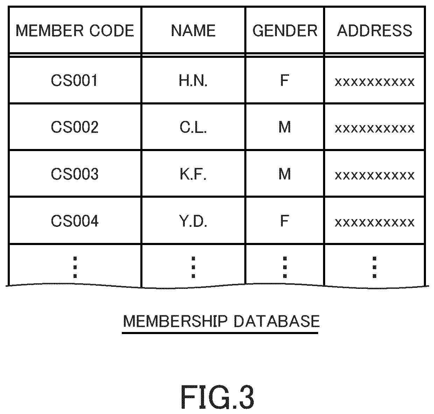

The application server 6 has a membership database in which information about a member using the e-commerce application is recorded. FIG. 3 shows an example of data components of the membership database.

The membership database shown in FIG. 3 is a database containing a value of each field of, for example, "MEMBER CODE," "NAME," "GENDER," and "ADDRESS," in one record. Each of the "NAME" field, the "GENDER" field, and the "ADDRESS" field is merely an example and can be changed as appropriate.

In the membership database, not only information about a customer who orders a product, but also pieces of information about an e-commerce company and a laundry shop that handles a returning operation of a product, are recorded. That is, an e-commerce company is also managed by a member code, and a laundry shop is also managed by a member code (an example of information about an intermediary).

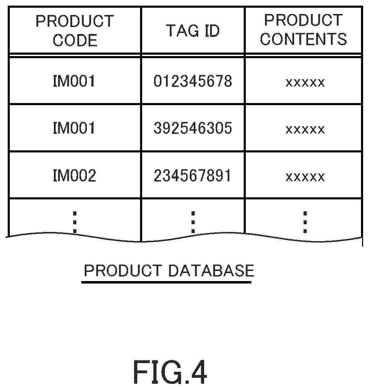

The application server 6 has a product database. FIG. 4 shows an example of data components of the product database.

The product database shown in FIG. 4 is a database containing a value of each field of, for example, "PRODUCT CODE," "TAG ID," and "PRODUCT CONTENTS," in one record. Each record corresponds to one certain product. Different individual products are assigned with respective records although having the same product code, and a tag ID of a tag attached to a product is associated with the record.

The product contents corresponding to a product code are used in order to provide them, for example, to a customer who purchased the corresponding product. In one embodiment, products having the same product code are associated with the same product contents.

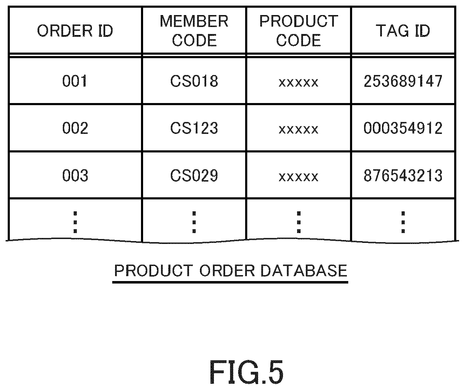

The application server 6 also has a product order database for managing an order for a product from a customer. FIG. 5 shows an example of data components of the product order database.

The product order database shown in FIG. 5 contains a value of each field of "ORDER ID," "MEMBER CODE," "PRODUCT CODE," and "TAG ID," in each record. In response to reception of an order for a product from a customer, an order ID is issued, and a member code corresponding to the customer, a product code of the ordered product, and a tag ID of a tag attached to the product are associated with one another in one record.

The product code is an example of information about a product. In the product order database, the order ID may also be associated with information about payment from a customer, information about refund to a customer, etc.

Although FIG. 1 shows only one customer terminal 2 and only one laundry shop terminal 4, the numbers thereof are not limited thereto, and customer terminals 2 and laundry shop terminals 4 in any desired numbers of two or greater can access the application server 6 via the network NW.

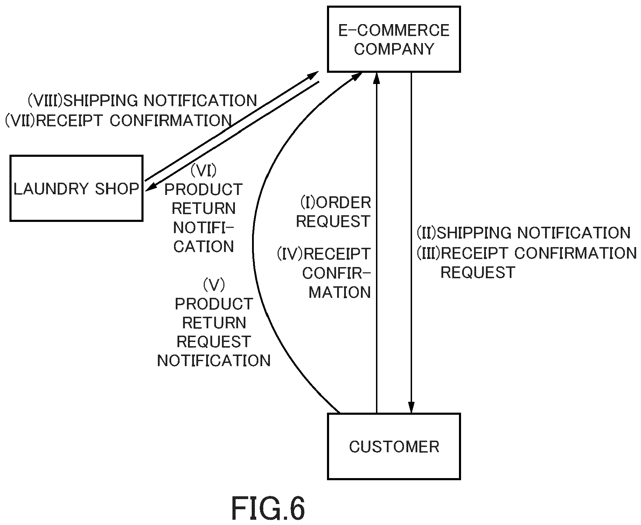

Next, flows of sale and return of a product by e-commerce in the e-commerce sales system 1 of the one embodiment will be described with reference to FIG. 6.

With reference to FIG. 6, a product is sold by e-commerce in the e-commerce sales system 1 of the one embodiment in accordance with a flow including the following steps (I) to (IV). In each step in FIG. 6, a customer, an e-commerce company, and a laundry shop or another intermediary do not directly send a request, a notification, etc., with one another, but they communicate with one another via the application server 6, in actual cases.
(I) A customer selects a product and places an order on the e-commerce application of the customer terminal 2.
   Upon receiving an order request of the product, for example, from the customer terminal 2, the application server 6 issues an order ID and adds one record in the product order database (FIG. 5). The record that is added contains a member code corresponding to the customer, a product code of the ordered product, and a tag ID of a tag attached to the product. On the other hand, in accordance with a request from the application server 6, the tag management server 5 rewrites the value in the "PRODUCT RECIPIENT" field of the tag information corresponding to the tag ID, to the member code corresponding to the customer, and it also changes the status flag of the tag information to "1" (in preparation), in the tag database.
(II) An e-commerce company sends a shipping notification to the customer after the product is ready to be shipped to the customer. Specifically, the e-commerce company terminal 3 requests the application server 6 to transmit a shipping notification to the customer terminal 2. In response to this request, the application server 6 transmits a shipping notification to the customer terminal 2. Thereafter, the e-commerce company sends out the product to the customer.
(III) The e-commerce company sends a receipt confirmation request to the customer, approximately at the estimated time of arrival of the product to the customer. Specifically, the e-commerce company terminal 3 requests the application server 6 to transmit a receipt confirmation request to the customer terminal 2. In response to this request, the application server 6 transmits a receipt confirmation request to the customer terminal 2. Although not shown in the drawing, the receipt confirmation request includes a "CONFIRM RECEIPT" button for notifying receipt of the product (for sending a receipt confirmation) to the application server 6.
   After the product reaches the customer, the e-commerce application of the customer terminal 2 can receive a packet that is transmitted by the tag attached to the arrived product and can obtain the tag ID contained in the packet.
(IV) The receipt confirmation that is a confirmation message showing reception of the product by the customer is notified to the e-commerce company.

When the customer operates the "CONFIRM RECEIPT" button on the e-commerce application of the customer terminal 2, a receipt confirmation is transmitted to the application server 6. This receipt confirmation contains the tag ID that is obtained in step (III).

Upon receiving the receipt confirmation, the application server 6 recognizes that the product has reached the customer, and it then requests the tag management server 5 to update the tag database. In accordance with this request, the tag management server 5 changes the status flag to "0" (confirmed) in the corresponding tag information.

As described above, after the product reaches the customer, the e-commerce application of the customer terminal 2 can receive a packet that is transmitted by the tag attached to the arrived product and can obtain the tag ID contained in the packet. Thus, when the application server 6 acquires the tag ID and the member code corresponding to the customer from the e-commerce application of the customer terminal 2 after the e-commerce company ships the product to the customer, the application server 6 can determine that the product has reached the customer by referring to the product order database. In this case, the application server 6 may change the status flag of the tag information to "0" (confirmed). That is, the application server 6 can associate the customer with the product corresponding to the tag ID and formally register the customer as a product recipient corresponding to the tag ID. In other words, the tag information is updated without receiving an operation to the "CONFIRM RECEIPT" button on the e-commerce application by the customer, which makes it possible to reduce an operational burden, such as an operation for confirming receipt, on the customer who is a product recipient. In addition, the e-commerce application of the customer terminal 2 can obtain the tag ID immediately after the product reaches the customer, and therefore, the customer who is a product recipient is associated with the product in real time. From another point of view, the tag ID is acquired from the e-commerce application of the customer terminal 2 of the customer who is a product recipient, whereby the state in which the shipped product actually reaches the customer is confirmed.

In order to increase safety in transferring a product, the following measures can be adopted.

(Measure 1) A shipping notification in step (II) is transmitted to the customer terminal 2, in the state of containing an access code. A receipt confirmation request that is sent in step (III) contains a request to operate the "CONFIRM RECEIPT" button after the access code is input. The application server 6 requests the tag management server 5 to update the tag database only in the case in which authentication of the access code contained in the receipt confirmation is succeeded. This measure prevents transmission of a receipt confirmation from a customer terminal 2 of a customer who did not place an order for the product.

(Measure 2) In sending a shipping notification in step (II) or a receipt confirmation request in step (III), the application server 6 provides key information for decoding a packet that is transmitted from a target tag, to the customer terminal 2. The customer terminal 2 obtains a tag ID by decoding the packet transmitted from the tag attached to the arrived product with the use of the key information, which is provided in advance. This measure prevents a tag ID from being obtained by a terminal of another customer who did not place an order for the product.

With reference to FIG. 6, a product is returned by e-commerce in the e-commerce sales system 1 of the one embodiment in accordance with a flow including the following steps (V) to (VIII).

(V) A customer makes a product return request on the e-commerce application of the customer terminal 2, for example, by designating a laundry shop to be used in returning a product. Then, a product return request notification is notified to an e-commerce company.

In one example, the customer can select and designate a nearby laundry shop or another intermediary on the e-commerce application by accessing the membership database.

Upon receiving the product return request, the application server 6 requests the tag management server 5 to update the tag database. The tag management server 5 rewrites the value in the "PRODUCT RECIPIENT" field of the tag information corresponding to the tag ID, to a member code corresponding to the laundry shop, and it also changes the status flag of the tag information to "1" (in preparation), in the tag database.

The application server 6 transmits a product return request notification to the e-commerce company terminal 3.

(VI) Instructions for returning a product are provided from the e-commerce company to the laundry shop.

Specifically, the application server 6 transmits a product return notification to the e-commerce application of the laundry shop terminal 4, which is held by the laundry shop designated by the customer. The product return notification contains a member code of the customer, a product code of the product to be returned, a tag ID, etc., as information about return of the product. The product return notification also includes a "CONFIRM RECEIPT" button for notifying receipt of the product to be returned (for sending a receipt confirmation) to the application server 6.

(VII) A receipt confirmation that is a confirmation message showing reception of the returned product by the laundry shop is notified to the e-commerce company.

When the product is delivered from the customer to the laundry shop, the e-commerce application of the laundry shop terminal 4 can receive a packet that is transmitted by the tag attached to the product delivered from the customer and can obtain the tag ID contained in the packet.

In response to a person in charge of the laundry shop operating the "CONFIRM RECEIPT" button on the e-commerce application of the laundry shop terminal 4, a receipt confirmation is transmitted to the application server 6. This receipt confirmation contains the tag ID that is obtained from the tag.

Upon receiving the receipt confirmation, the application server 6 recognizes that the product has reached the laundry shop, and it then requests the tag management server 5 to update the tag database. In accordance with this request, the tag management server 5 changes the status flag to "0" (confirmed) in the corresponding tag information.

As described above, after the product reaches the laundry shop, the e-commerce application of the laundry shop terminal 4 can receive a packet that is transmitted by the tag attached to the product delivered from the customer and can obtain the tag ID contained in the packet. Thus, when the application server 6 acquires the tag ID and the member code corresponding to the laundry shop from the e-commerce application of the designated laundry shop terminal 4 after receiving the product return request from the customer, the application server 6 can determine that the product has reached the laundry shop by referring to the tag database via the tag management server 5. In this case, the application server 6 may cause changing the status flag of the tag information to "0" (confirmed). The e-commerce application of the laundry shop terminal 4 can obtain the tag ID immediately after the product to be returned is delivered to the laundry shop, and therefore, the laundry shop which is a product recipient is associated with the product in real time. From another point of view, the tag ID is acquired from the e-commerce application of the laundry shop terminal 4 of the laundry shop which is a product recipient, whereby the state in which the product to be returned actually reaches the laundry shop is confirmed. In addition, in a transport process until the product to be returned is delivered to the e-commerce company, it is possible to clarify a product management responsible member (the laundry shop in a case in which the product is at the laundry shop).

(VIII) The laundry shop sends a shipping notification to the e-commerce company after the returned product is ready to be shipped to the e-commerce company. Specifically, the laundry shop terminal 4 requests the application server 6 to transmit a shipping notification to the e-commerce company terminal 3. In response to this request, the application server 6 transmits a shipping notification to the e-commerce company terminal 3. Thereafter, the laundry shop sends out the product to the e-commerce company.

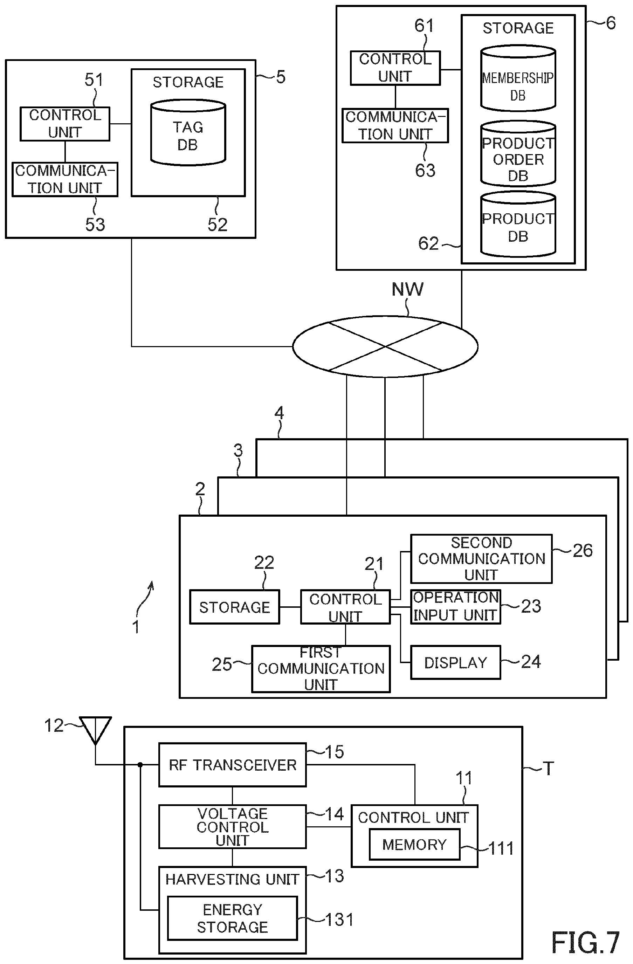

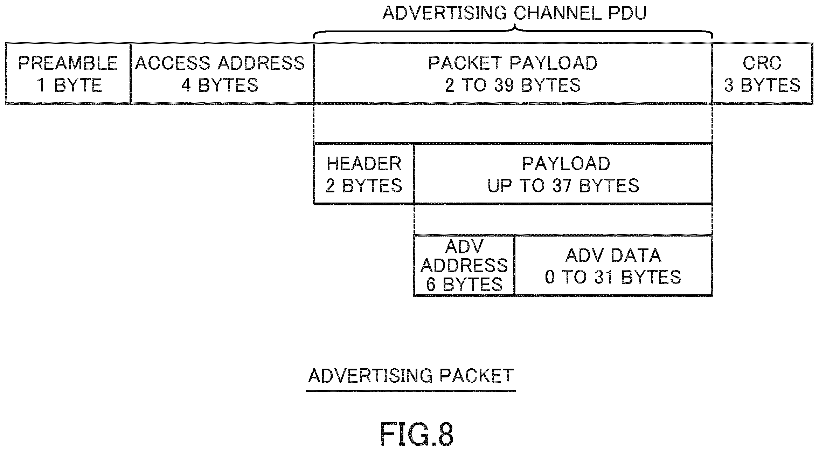

Next, a configuration of each device of the e-commerce sales system 1 of this embodiment will be described with reference to FIGs. 7 and 8.

FIG. 7 is a block diagram showing an internal configuration of each device of the e-commerce sales system 1 of this embodiment. FIG. 8 shows a structure of an advertising packet that is transmitted from a tag.

With reference to FIG. 7, a tag "T" includes a control unit 11, an antenna 12, a harvesting unit 13, a voltage control unit 14, and an RF transceiver 15.

Although the whole shape of the tag is not shown in the drawing, the tag is, for example, a thin film member including a conductive metal foil that has a predetermined pattern for forming an antenna 12, and also including an IC chip connected to the metal foil. The IC chip is mounted with the control unit 11, the harvesting unit 13, the voltage control unit 14, and the RF transceiver 15.

The control unit 11 includes a microprocessor and a memory 111 and controls the whole IoT tag. The memory 111 is a random access memory (RAM) or a read only memory (ROM) and stores a tag ID in addition to a program that is executed by the microprocessor.

The harvesting unit 13 performs energy harvesting to generate power based on radio waves in the surrounding environment (e.g., radio waves of surrounding wireless communication), and it stores the power in an internal energy storage 131. In one embodiment, the harvesting unit 13 converts, for example, a radio signal that is received by the antenna 12, into DC voltage, and it stores it in the energy storage 131. The energy storage 131 is a capacitor, for example. In the case of using a capacitor, one that is mounted on a semiconductor chip (that is, an on-die capacitor) may be used.

Radio waves of a plurality of different frequency bands over a wide range can be used as radio waves that are used in energy harvesting by the harvesting unit 13. In one embodiment, the tag "T" operates by obtaining energy from radio waves of one or a plurality of certain frequencies present in the surroundings. The certain frequency includes radio waves of any frequencies that can be converted into energy by the tag "T." The certain frequency may include one or a plurality of frequency bands or may be a specific frequency that is assigned within a frequency band.

In one embodiment, the certain frequency may be a specific frequency or a specific frequency band that is standardized, for example, in a wireless communication standard, and it is a specific frequency or a specific frequency band that is designated by a company that provides the e-commerce application of this embodiment.

Non-limiting examples of radio waves that can be used in energy harvesting by the harvesting unit 13 include radio waves for wireless communication in frequency bands employed in mobile communication systems such as 3G to 5G systems, radio waves for wireless communication in frequency bands employed in communication standards such as Bluetooth (registered trademark) and Wi-Fi (registered trademark), radio waves for wireless communication in 2.4 GHz band, represented by communication protocols such as ZigBee (registered trademark) and Thread, radio waves for wireless communication in frequency bands employed in RFID (e.g., 900 MHz band and 13.56 MHz band).

In general, radio waves as illustrated herein are applicable to almost all homes. The tag operates by power that is obtained in energy harvesting based on radio waves in the surrounding environment by the harvesting unit 13. Thus, it is not necessary to mount a battery on the tag, whereby a system cost can be reduced. In addition, due to no need of mounting a battery, a replacement operation of a battery is not required, whereby failure to obtain a tag ID in spite of the presence of a tag, does not occur.

The voltage control unit 14 supplies operating voltage to the control unit 11 and the RF transceiver 15 and monitors voltage of the energy storage 131 to switch power modes in accordance with result of monitoring. When the voltage of the energy storage 131 is not more than a predetermined threshold, the power mode is switched to a first mode for operating only minimal circuits. Under these conditions, the control unit 11 and the RF transceiver 15 do not perform processes such as generation of a packet (described later) and transmission of a radio signal. When the voltage of the energy storage 131 is charged to a degree not less than the predetermined threshold, the power mode is switched to a second mode for executing a normal processing routine. Under these conditions, the control unit 11 and the RF transceiver 15 perform various processes, including generation of a packet and transmission of a radio signal.

The control unit 11 generates an advertising packet in accordance with a BLE protocol when the power mode is in the second mode.

The advertising packet is a packet that is transmitted by using an advertising channel, in order to implement a BLE broadcast communication. The advertising packet has a packet structure as shown in FIG. 8. Hereinafter, an advertising packet is simply referred to as a "packet" as appropriate.

FIG. 8 shows a preamble and an address access that are each a predetermined fixed value. CRC is a cyclic redundancy check code and is check data that is calculated with respect to a packet payload (that is, an advertising channel protocol data unit (PDU)) by using a predetermined generator polynomial.

The advertising channel PDU (hereinafter simply referred to as a "PDU") is composed of a header and a payload. This payload is composed of an ADV address and ADV data. The ADV address is an address of an advertiser (that is, an IoT tag that is a main device for notification), but it may be a random value set each time transmission is performed, in order to prevent the source from being identified. The ADV data is data (broadcast data) of the advertiser, and it contains a tag ID in this embodiment.

The control unit 11 preferably encodes the PDU. Although the method of encoding is not limited, advanced encryption standard (AES) using a key length of 128 bits can be used, for example.

The RF transceiver 15 performs predetermined digital modulation (e.g., Gaussian frequency shift keying (GFSK)) on a packet (baseband signal) to be transmitted and then performs quadrature modulation thereon, and it sends a high-frequency signal (in the case of BLE, a signal of a frequency band of 2.4 GHz) to the antenna 12.

The antenna 12 includes a transmission antenna and a power generation antenna.

The transmission antenna transmits a high-frequency radio signal (packet) that is sent from the RF transceiver 15. On the other hand, the power generation antenna receives, for example, radio waves in the surrounding environment, and it functions as a rectenna in cooperation with the harvesting unit 13.

As shown in FIG. 7, the customer terminal 2 includes a control unit 21, a storage 22, an operation input unit 23, a display 24, a first communication unit 25, and a second communication unit 26.

The control unit 21 is composed mainly of a microprocessor and controls the whole customer terminal 2. In one example, the control unit 21 executes the e-commerce application to control the first communication unit 25 so as to communicate with a tag, and it receives a packet from the tag and transmits a tag ID that is contained in the packet, to the application server 6.

The control unit 21 executes the e-commerce application to make various requests (e.g., an order request, a product return request, and transmission requests of various notifications) to the application server 6.

The control unit 21 executes the e-commerce application to obtain a notification (e.g., a shipping notification or a receipt confirmation request, as described above) that is transmitted from the application server 6, and it displays this notification on the display 24.

The storage 22 is a storage device, such as a solid state drive (SSD), and it stores results of executing the e-commerce application, data (e.g., authentication data) necessary to execute the e-commerce application, etc.

The operation input unit 23 is an input interface that receives operation input from a customer in order to execute each program, including the e-commerce application, and it may be a touch panel input unit provided to a display panel of the display 24.

The display 24 includes a display panel, such as a liquid crystal panel (LCD), and a driving circuit of the display panel, and it displays results of executing the e-commerce application.

The first communication unit 25 wirelessly communicates with a target object, for example, in a communication range smaller than that of the second communication unit 26, and it receives, for example, a packet that is transmitted in accordance with a BLE protocol from each tag.

The second communication unit 26 is a communication interface for communicating with the application server 6. The communication protocol is not limited, but for example, it may be HTTP or HTTPS.

The configurations of the e-commerce company terminal 3 and the laundry shop terminal 4 can be the same as that of the customer terminal 2, and therefore, redundant descriptions are omitted.

As shown in FIG. 7, the tag management server 5 includes a control unit 51, a storage 52, and a communication unit 53.

The control unit 51 is composed mainly of a microprocessor and controls the whole tag management server 5.

The storage 52 is a storage device, such as an HDD, and it stores the tag database (refer to FIG. 2).

The communication unit 53 is a communication interface for communicating with the application server 6.

In response to the microprocessor executing a program, for example, the control unit 51 accesses the storage 52 to rewrite certain tag information in the tag database when receiving a rewrite request from the e-commerce company terminal 3. In one example, when an event such as ordering for a product or returning of a product, occurs, a product recipient is changed, whereby the control unit 51 updates the value in the "PRODUCT RECIPIENT" field of the tag information.

Specifically, in a case of transferring a product from a first product recipient to a second product recipient, the control unit 51 receives information that designates the second product recipient as the next product recipient, from a terminal (a terminal such as a customer terminal 2, an e-commerce company terminal 3, or a laundry shop terminal 4) held by the first product recipient. Then, the control unit 51 associates information about the second product recipient (that is, a member code), with a tag ID in the tag information.

In addition, the control unit 51 rewrites the status flag that shows whether the product recipient is confirmed, in the tag information.

Upon receiving an inquiry about whether a customer having a certain member code is a product recipient of a product, from the application server 6, the control unit 51 checks a combination of the member code and the tag ID contained in the inquiry, against the tag database, and it returns the check result to the application server 6.

As shown in FIG. 7, the application server 6 includes a control unit 61, a storage 62, and a communication unit 63.

The control unit 61 is composed mainly of a microprocessor and controls the whole application server 6. In one example, in response to the microprocessor executing a server program, the control unit 61 is accessed by each client of the customer terminal 2, the e-commerce company terminal 3, and the laundry shop terminal 4. Then, the control unit 61 establishes a session by identifying a member code and executes the above-described various processes, in accordance with a request from the client.

When an event that causes a need to rewrite the tag information contained in the tag database, occurs, the control unit 61 transmits a rewrite request to the tag management server 5.

In one embodiment, the control unit 61 determines whether a product is returned from a customer, based on a product return request of the product to the e-commerce company, which is obtained from the customer terminal 2, and on a tag ID corresponding to the target product to be returned, which is obtained from the e-commerce company terminal 3.

In one embodiment, the control unit 61 determines that the product is returned from the customer, in the following conditions that: a product return request containing a product code of the product to be returned is received from the customer terminal 2; and the tag ID, which is received by the e-commerce company terminal 3 from a tag attached to the product (the returned product), agrees with the tag ID corresponding to the product code contained in the product return request.

Different tag IDs are assigned to products although the products have the same product code. Thus, it is possible to determine whether an individual product that is held by the customer is identical to an individual product that is returned to the e-commerce company, by comparing whether the tag IDs agree with each other. This enables recognizing whether a correct product is returned, even when a customer wrongly or intentionally returns a different individual product.

Upon receiving a product information request containing a tag ID, from the e-commerce application of the customer terminal 2, the control unit 61 makes an inquiry about whether the customer of the target member code is a correct product recipient of the product, to the tag management server 5. In the case in which the customer is a correct product recipient, the control unit 61 provides corresponding product contents to the e-commerce application of the request source. In other words, when the customer is determined as being a product recipient of the product because the member code corresponding to the customer and the tag ID are associated with each other in the tag database, the control unit 61 controls so that product contents corresponding to the product can be provided to the e-commerce application of the customer.

The storage 62 (an example of a storage) is a storage device, such as a hard disk drive (HDD), and it stores a membership database (refer to FIG. 3), a product database (refer to FIG. 4), and a product order database (refer to FIG. 5). Although not shown in the drawing, the storage 62 also stores data related to a product return request (a member code of a customer, a product code of a product to be returned, a member code of a laundry shop through which a product is returned, and the like).

The communication unit 63 is a communication interface for communicating with the customer terminal 2, the e-commerce company terminal 3, and the laundry shop terminal 4. The communication protocol is not limited, but for example, it may be HTTP or HTTPS.

The communication unit 63 is also a communication interface for communicating with the tag management server 5.

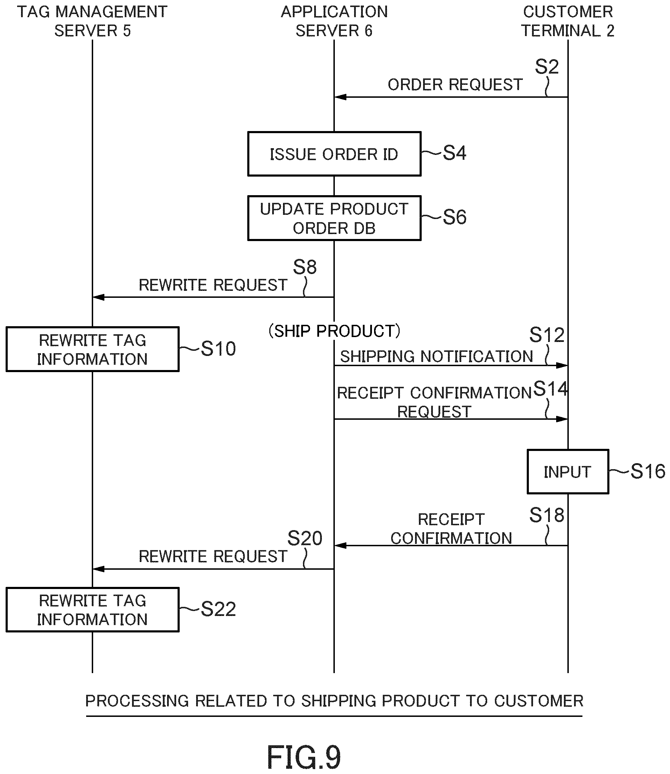

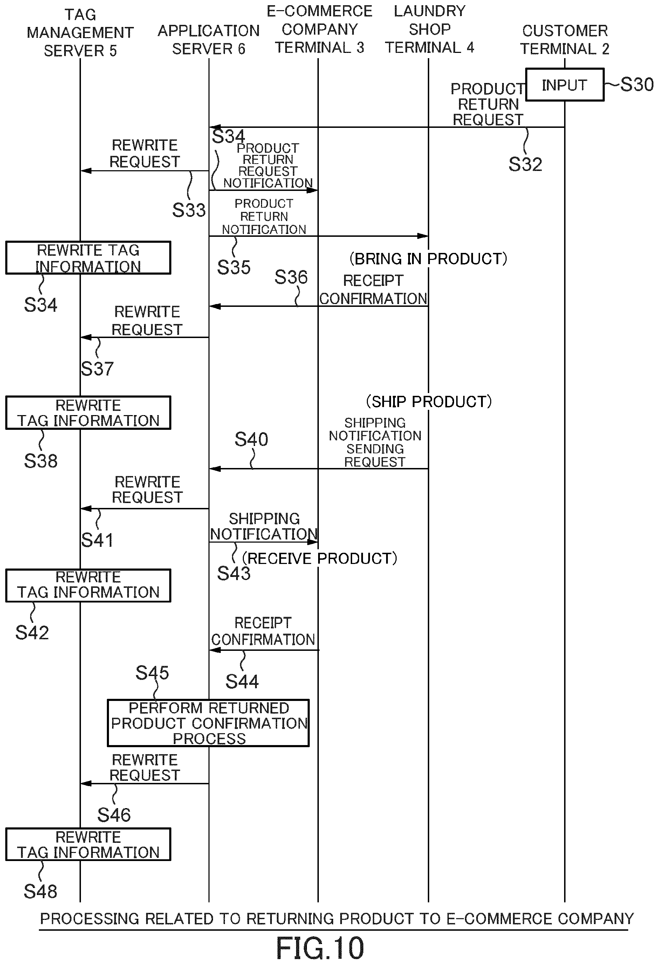

Next, operations of the e-commerce sales system 1 will be described with reference to FIGs. 9 and 10. Each of FIGs. 9 and 10 is a sequence chart showing an operation of the e-commerce sales system 1.

Each drawing assumes that a session is established between the e-commerce application of each of the customer terminal 2, the e-commerce company terminal 3, and the laundry shop terminal 4 and the e-commerce company terminal 3, and that the application server 6 recognizes a member code corresponding to the e-commerce application of a communication partner.

FIG. 9 is a sequence chart showing processing related to shipping a product to a customer.

As shown in FIG. 9, when a customer operates to select and place an order for a product on the e-commerce application of the customer terminal 2, the e-commerce application of the customer terminal 2 transmits an order request to the application server 6 (step S2). The order request contains a product code of the ordered product.

Upon receiving the order request of the product, the application server 6 issues an order ID (step S4) and adds one record in the product order database (FIG. 5) to update the product order database (step S6). The added record contains a member code corresponding to the customer, the product code contained in the order request, and a tag ID of a tag attached to the product. The application server 6 can assign to the added record, for example, one of tag IDs that is selected with respect to the product code contained in the order request, from the product database (FIG. 4). Thus, a certain individual product is assigned to the order of the customer.

Next, the application server 6 transmits a rewrite request of the tag information to the tag management server 5 (step S8). The rewrite request contains the member code of the customer, who will be a product recipient, and also contains the tag ID contained in the record added to the product order database.

In response to this rewrite request, the tag management server 5 rewrites the value in the "PRODUCT RECIPIENT" field of the tag information corresponding to the tag ID, to the member code contained in the rewrite request, and it also changes the status flag of the tag information to " 1 " (in preparation), in the tag database (step S10).

An e-commerce company sends out the product after the product is ready to be shipped to the customer, and it also operates the e-commerce application to send a shipping notification to the customer. Thus, the e-commerce application of the e-commerce company terminal 3 requests the application server 6 to transmit a shipping notification to the customer terminal 2. In response to this request, the application server 6 transmits a shipping notification to the customer terminal 2 (step S12).

Then, the e-commerce company operates the e-commerce application to request the customer to confirm receipt, approximately at the estimated time of arrival of the product to the customer. Thus, the e-commerce application of the e-commerce company terminal 3 requests the application server 6 to transmit a receipt confirmation request to the customer terminal 2. In response to this request, the application server 6 transmits a receipt confirmation request to the customer terminal 2 (step S14).

After the product that is shipped from the e-commerce company reaches the customer, the e-commerce application of the customer terminal 2 receives a packet that is transmitted by the tag attached to the product, to obtain the tag ID contained in the packet.

Then, when the customer operates the "CONFIRM RECEIPT" button contained in the receipt confirmation request, which is received in step S14 (step S16), the e-commerce application of the customer terminal 2 transmits a receipt confirmation to the application server 6 (step S18). This receipt confirmation contains the tag ID that is obtained from the tag attached to the product.

However, it is not necessary for the customer to operate the "CONFIRM RECEIPT" button. As described above, after the product reaches the customer, the e-commerce application of the customer terminal 2 can receive a packet that is transmitted by the tag attached to the arrived product and can obtain the tag ID contained in the packet. The e-commerce application of the customer terminal 2 may transmit the obtained tag ID to the application server 6, and the application server 6 may receive the tag ID. In this case, the application server 6 can determine that the product has reached the customer (that is, the customer has received the product) by referring to the product order database.

Upon receiving the receipt confirmation, the application server 6 transmits a rewrite request to the tag management server 5 (step S20). In accordance with this rewrite request, the tag management server 5 changes the status flag of the tag information to "0" (confirmed), which is rewritten in step S10, in the tag database (step S22). In other words, in the state in which the customer terminal 2 obtains the tag ID from the tag of the product, the tag management server 5 associates the member code of the customer (an example of information about a product recipient) with the tag ID. This causes the customer who has placed the order, to be formally registered as a product recipient of the product that is delivered.

FIG. 10 is a sequence chart showing processing related to returning a product to an e-commerce company.

As shown in FIG. 10, for example, if a customer desires to return an ordered product that is delivered because of not being satisfied with the product, the customer operates the e-commerce application to send a product return request (step S30). In this operation, it is possible to designate a laundry shop as a product return destination, for example. In accordance with the operation by the customer, the e-commerce application of the customer terminal 2 transmits a product return request containing a product code of the product to be returned and a tag ID, a member code corresponding to the designated laundry shop, and the like, to the application server 6 (step S32).

Upon receiving the product return request, the application server 6 transmits a rewrite request to the tag management server 5 (step S33). The tag management server 5 rewrites the value in the "PRODUCT RECIPIENT" field of the tag information corresponding to the tag ID, to the member code corresponding to the laundry shop, which is contained in the product return request, and it also changes the status flag of the tag information to "1" (in preparation), in the tag database (step S34).

Next, the application server 6 transmits a product return request notification to the e-commerce company terminal 3 in order to make the e-commerce company recognize that the product return request is made (step S34). The product return request notification contains the member code of the customer who makes the product return request, the product code of the product to be returned, the tag ID, and the member code corresponding to the laundry shop, which are contained in the product return request in step S32, and the like.

Moreover, the application server 6 transmits a product return notification to the e-commerce application of the laundry shop, which is contained in the product return request (step S35). The product return notification contains the member code of the customer, the product code of the product to be returned, and the tag ID, etc., as information about return of the product. The laundry shop recognizes that the product is returned from a certain customer, by receiving this product return notification.

Thereafter, when the product is brought in the laundry shop from the customer, the e-commerce application of the laundry shop terminal 4 receives a packet that is transmitted by the tag attached to the product brought in from the customer, to obtain the tag ID contained in the packet. When a person in charge of the laundry shop operates the "CONFIRM RECEIPT" button, which is contained in the product return notification received in step S35, on the e-commerce application of the laundry shop terminal 4, a receipt confirmation is transmitted to the application server 6 (step S36). This receipt confirmation contains the tag ID that is obtained from the tag.

However, it is not necessary for the person in charge of the laundry shop to operate the "CONFIRM RECEIPT" button. As described above, after the product reaches the laundry shop, the e-commerce application of the laundry shop terminal 4 can receive a packet that is transmitted by the tag attached to the returned product and can obtain the tag ID contained in the packet. The e-commerce application of the laundry shop terminal 4 may transmit the obtained tag ID to the application server 6, and the application server 6 may receive the tag ID. In this case, the application server 6 can determine that the product to be returned has reached the laundry shop (that is, the laundry shop has received the product to be returned) by referring to the product order database or the product return request.

The application server 6 may control so that the laundry shop terminal 4 of the laundry shop of the member code, which is contained in the product return request, can communicate with the tag. In one example, a decoding key for decoding a packet that is transmitted from the tag is sent to the e-commerce application of the laundry shop terminal 4, in the product return notification in step S35. This enables only the e-commerce application of the laundry shop, which is designated in the product return request, to obtain a tag ID. This process prevents an unintended third party from acquiring a tag ID in the transport process of returning a product to an e-commerce company.

Upon receiving the receipt confirmation in step S36, the application server 6 transmits a rewrite request to the tag management server 5 (step S37). In accordance with this rewrite request, the tag management server 5 changes the status flag of the tag information to "0" (confirmed), which is rewritten in step S34, in the tag database (step S38). In other words, in the state in which the laundry shop terminal 4 obtains the tag ID from the tag attached to the product, the tag management server 5 can associate the member code of the laundry shop with the tag ID.

After the returned product is ready to be shipped to the e-commerce company, the laundry shop operates the e-commerce application to send a shipping notification to the e-commerce company. In response to this operation, the e-commerce application of the laundry shop terminal 4 transmits a shipping notification sending request, which requests transmission of a shipping notification to the e-commerce company terminal 3, to the application server 6 (step S40). The shipping notification sending request contains a member code corresponding to the e-commerce company.

Upon receiving the shipping notification sending request, the application server 6 transmits a rewrite request to the tag management server 5 (step S41). The tag management server 5 rewrites the value in the "PRODUCT RECIPIENT" field of the tag information corresponding to the tag ID, to the member code corresponding to the e-commerce company, which is contained in the shipping notification sending request, and it also changes the status flag of the tag information to "1" (in preparation), in the tag database (step S42).

Then, the application server 6 transmits a shipping notification to the e-commerce company terminal 3 (step S43).

Thereafter, the laundry shop sends out the product to the e-commerce company, and the e-commerce company receives the product.

In one example, after a person in charge receives the returned product in a warehouse of the e-commerce company, the e-commerce application of the e-commerce company terminal 3 receives a packet that is transmitted by the tag attached to the returned product, to obtain the tag ID contained in the packet. When the person in charge of the e-commerce company operates the "CONFIRM RECEIPT" button, which is contained in the shipping confirmation received in step S43, on the e-commerce application of the e-commerce company terminal 3, a receipt confirmation is transmitted to the application server 6 (step S44). This receipt confirmation contains the tag ID that is obtained from the tag.

However, it is not necessary for the person in charge of the e-commerce company to operate the "CONFIRM RECEIPT" button. As described above, after the product arrives at a warehouse or the like of the e-commerce company, the e-commerce application of the e-commerce company terminal 3 can receive a packet that is transmitted by the tag attached to the returned product and can obtain the tag ID contained in the packet. The e-commerce application of the e-commerce company terminal 3 may transmit the obtained tag ID to the application server 6, and the application server 6 may receive the tag ID. In this case, the application server 6 can determine that the product to be returned has reached the e-commerce company (that is, the e-commerce company has received the product to be returned) by referring to the product order database or the product return request.

Upon receiving the receipt confirmation, the application server 6 performs a returned product confirmation process (step S45). The returned product confirmation process is a process for confirming whether a correct individual product is returned from the customer. Specifically, it is determined whether the tag ID contained in the confirmation process in step S44 (that is, the tag ID that the e-commerce company terminal 3 receives from the tag attached to the returned product) agrees with the tag ID corresponding to the product code contained in the product return request. In the case in which they agree with each other, it is determined that a correct individual product is returned.

Next, the application server 6 transmits a rewrite request to the tag management server 5 (step S46). In accordance with this rewrite request, the tag management server 5 changes the status flag of the tag information to "0" (confirmed), which is rewritten in step S42, in the tag database (step S48).

As described above, the application server 6 receives a tag ID from the e-commerce application of the customer terminal 2 at the time the customer receives a product, and it also receives a tag ID from the e-commerce application of the laundry shop terminal 4 at the time the laundry shop receives a product. Moreover, the application server 6 receives a tag ID from the e-commerce application of the e-commerce company terminal 3 at the time the e-commerce company receives a product. That is, the application server 6 receives the tag ID from each terminal, whereby a place at which the product is actually kept is recognized with respect to each terminal at the time each of the customer, the laundry shop, and the e-commerce company receives the product. In addition, the application server 6 reliably determines that each product recipient (the customer, the laundry shop, the e-commerce company, or the like) has received the product, by receiving a notification of "receipt confirmation" from each terminal.

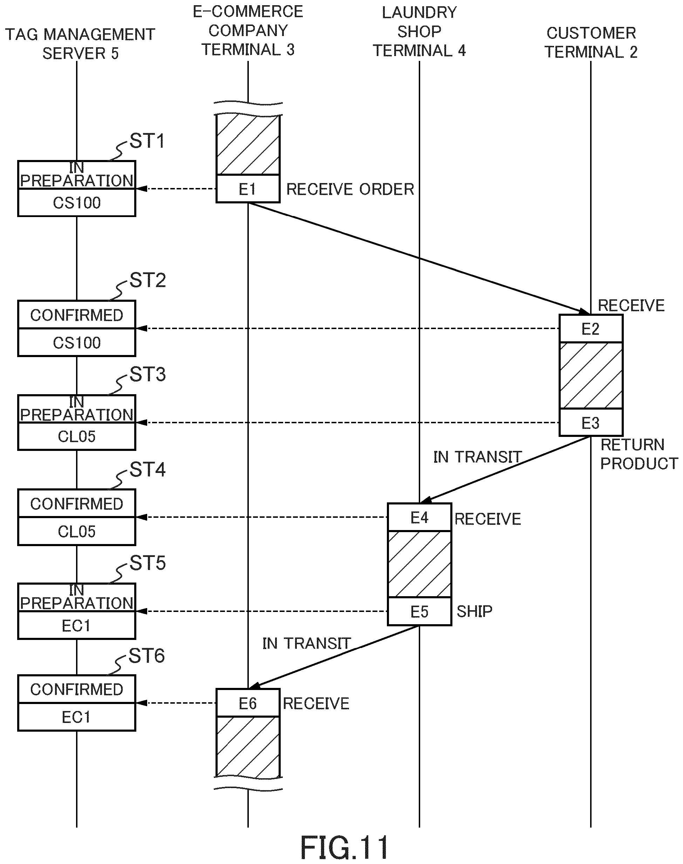

FIG. 11 shows timing to rewrite the tag information during a period from reception of an order for a product from a customer until reception of the product that is returned.

As shown in FIG. 11, events E1 to E6 represent events that cause rewriting of the tag information. Specifically, the event E1 corresponds to a time when the e-commerce company terminal 3 receives an order for a product, the event E2 corresponds to a time when the customer terminal 2 performs a reception process of the product, and the event E3 corresponds to a time when the customer terminal 2 performs a returning process of the product. Moreover, the event E4 corresponds to a time when the laundry shop terminal 4 performs a reception process of the product, the event E5 corresponds to a time when the laundry shop terminal 4 performs a shipping process of the product, and the event 6E corresponds to a time when the e-commerce company terminal 3 performs a reception process of the product. FIG. 11 shows statuses ST1 to ST6 of the tag information that is managed by the tag management server 5. The statuses ST1 to ST6 represent a status of the tag information that is changed in accordance with the corresponding events E1 to E6, and a lower field shows a product recipient of a product, whereas an upper field shows whether the corresponding product recipient is confirmed.

FIG. 11 shows member codes as follows: a member code of an e-commerce company that ships a product to a customer in response to receiving an order for the product from the customer is represented as "EC1," a member code of the customer who places the order for the product is represented as "CS100," and a member code of a laundry shop that receives the product to be returned, from the customer, is represented as "CL05."

As shown in FIG. 11, a product is transferred many times among the three members of the e-commerce company, the customer, and the laundry shop. In this situation, a member that has a target product among the three members of the e-commerce company, the customer, and the laundry shop, is recorded in the tag database as a confirmed product recipient, based on obtaining of a tag ID of a tag, which is attached to the product, by each terminal. In addition, a member that will obtain a product among the three members of the e-commerce company, the customer, and the laundry shop, is recorded in the tag database as a product recipient during preparation. Thus, in one embodiment, the application server 6 recognizes a product recipient as a product management responsible member by referring to the tag database of the tag management server 6, in the case in which a product is transferred many times among a plurality of members.

The product recipient is successively changed among the e-commerce company, the laundry shop, and the customer, as shown in FIG. 11. In one example, in a situation of transferring a product from the e-commerce company to the customer, the e-commerce company is an example of the first product recipient, and the customer is an example of the second product recipient. In a situation of returning a product from the laundry shop to the e-commerce company, the laundry shop is an example of the first product recipient, and the e-commerce company is an example of the second product recipient.

The tag management server 5 can recognize a product recipient, and therefore, in one embodiment, it is possible to provide product contents to the product recipient, as information about the product.

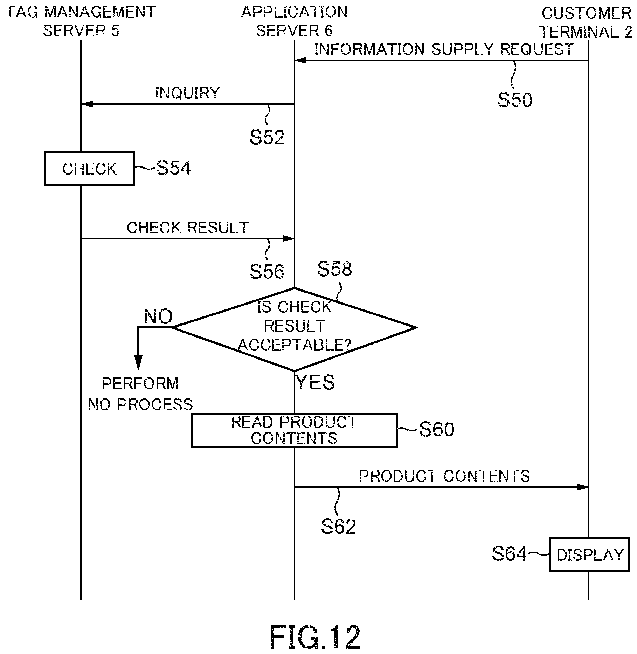

FIG. 12 is a sequence chart showing processing for providing product contents to a customer who is a product recipient.

In one example, when a product that is obtained by purchase by a customer is close to the customer terminal 2, the e-commerce application of the customer terminal 2 obtains a tag ID from a packet that is transmitted by a tag attached to the product, and it then sends an information supply request containing the tag ID, to the application server 6 (step S50). The information supply request is a request to the application server 6 for information about a target product, and it may be transmitted in response to the customer performing a predetermined operation on the e-commerce application or may be automatically transmitted each time the tag ID is obtained.

Upon receiving the information supply request, the application server 6 transmits an inquiry about whether the source customer is a product recipient, to the tag management server 5 (step S52). The tag management server 5 that receives this inquiry checks a combination of the member code and the tag ID contained in the inquiry, against the tag database (step S54), and it returns the check result to the application server 6 (step S56).

In the case in which the check result is acceptable (step S58: YES), the application server 6 refers to the product database (FIG. 4) to read product contents corresponding to the tag ID contained in the information supply request (step S60), and it transmits them to the e-commerce application of the request source customer terminal 2 (step S62). The e-commerce application of the customer terminal 2 receives and displays the product contents (step S64).

As described above, in the e-commerce sales system 1 of the one embodiment, the product recipient is managed by the tag management server 5. Thus, in the condition in which information to be provided, such as product contents, is associated with a tag ID or a product code, a purchaser of a corresponding product or another product recipient can be continuously provided with, for example, information about the product, after purchase of the product. In addition, in the e-commerce sales system 1 described above, it is also possible to associate a customer with one or a plurality of products (e.g., a group of products such as skirts and jackets, in a case of apparel), whereby useful contents or the like can be delivered to each customer in accordance with acquisition conditions of products.

The e-commerce sales system 1 is described above by assuming that a product is an apparel item, such as a piece of clothing, but the type of the product is not limited thereto. The e-commerce sales system 1 can be used for other types of products (e.g., cosmetics, daily necessities, groceries, home furnishings, home appliances, office equipment, and outdoor goods). The e-commerce sales system 1 can also be used for online rental services of articles (e.g., clothing subscription).

Although a laundry shop is described as an example of an intermediary in a case of returning a product by a customer, the kind of the intermediary is not limited thereto, and another intermediary such as a carrier, is also available.

In the e-commerce sales system 1, any type of product can be handled, and therefore, a customer may be associated with products of a plurality of different fields. In this case, it is also possible to provide useful contents in accordance with acquisition conditions of products by the customer.

In one example, due to a person, who is not a product recipient, being near a product recipient, the e-commerce application of the customer terminal 2 of the person who is not a product recipient may obtain a tag ID of a tag attached to a product of the product recipient and may transmit an information supply request to the application server 6. In such a case, the tag ID and a member code of the person who is not a product recipient are not recorded in the tag database in an associated manner, whereby the process in step S58 in FIG. 12 results in a check error. Thus, product contents are not provided to the e-commerce application of the person who is not a product recipient. This procedure makes the system provide product contents only to a product recipient. In another example, when a check error continues after a product confirmation is sent, it may be determined that the product has not reached a correct product recipient yet, and this result may be notified to the e-commerce company terminal.

As described above, in the e-commerce sales system 1, for example, when a product recipient is changed (e.g., in a case of returning a product, a product recipient is changed from a customer to a laundry shop and to an e-commerce company, in this order), the tag database records information about the product recipient (member code) in association with a tag ID, each time the product recipient is changed. When one of product recipients obtains a product, and a terminal of the one product recipient obtains a tag ID of a tag attached to the product, information about the product recipient in the tag database is changed. Thus, it is not necessary for each product recipient to perform some complicated processes.

In addition, product recipients are centrally managed in the tag database, which enables the application server to continuously recognize the current product recipient and to appropriately provide information such as product contents, to the product recipient.

In one embodiment, information about a previous product recipient of a product (that is, a member code) may be associated with a tag ID of a tag attached to the product, in the tag database. That is, the tag information may contain not only the current product recipient but also a previous product recipient. For example, in the case shown in FIG. 11, the member codes EC1, CS100, CL01, and EC1 are recorded in this order in the "PRODUCT RECIPIENT" field of the tag database. This enables recognizing a history of product recipients in the case in which the product recipient is changed many times in a transport stage of a product and due to transfer of the product. The application server 6, which recognizes a product recipient and an acquisition condition of a product at the current time and a product recipient and an acquisition condition of the product at a previous time, can effectively provide contents. For example, the current product recipient of a product can be provided with contents related to another product that is obtained by a previous product recipient of the product.

In the e-commerce sales system 1 of the one embodiment, in returning a product, a customer does not need to perform complicated work such that the customer fills out a return form, packs up the product, and ships the product to an e-commerce company by a parcel delivery service or the like, unlike an existing system. The e-commerce sales system 1 can also reduce work for receiving the returned product at the e-commerce company. Thus, the convenience of both of the customer and the e-commerce company is improved when the customer returns a product.

The improvement in convenience in returning a product sold by e-commerce enables a customer to easily place an order without anxiety for returning a product, resulting in spreading e-commerce sale.

Although embodiments of the information processing terminal, the information processing system, the information processing method, and the program are described above, the present invention should not be limited to the foregoing embodiments. In addition, the embodiments described above can be variously modified and altered within the scope not departing from the gist of the present invention.

A case of using an energy harvesting IoT tag that operates by obtaining energy from radio waves in the surrounding environment, as a radio tag, is described above as an example. Unlike an existing passive tag, an IoT tag operates by power that is supplied from radio waves present in the surrounding environment. Thus, in the case of using an IoT tag, it is not necessary to dispose an interrogator in a fixed manner, close to the IoT tag at any time for the purpose of supplying power. However, an IoT tag may not be used.

A device having a sensor that is assembled with an active RFID tag (active tag) with a built-in battery or a passive RFID tag (passive tag) with no built-in battery, may be used as a radio tag. In this case, an interrogator is set up in a user's home, a laundry shop, and a warehouse of an e-commerce company, for example. The interrogator reads a tag ID and sensor data stored in an RFID tag and notifies them to the application server 6.

Alternatively, a BLE tag may be used as a radio tag. A BLE tag performs a BLE communication as in the case of the above-described IoT tag, but it has a built-in battery unlike an IoT tag. Similarly, a BLE tag can be incorporated with a sensor. As in the case of an IoT tag, a BLE tag transmits radio waves containing a tag ID by broadcast or the like, and each terminal receives the radio waves to perform the above-described processes.

The method of managing a tag ID of a tag attached to a product and a product recipient by the tag management server has no relation with the type of the product and a selling method whether the product is transferred by e-commerce sale, and this method is not limited to a certain product and a certain transferring method. Also, in a case in which a tag is attached to a product that is sold in a physical store, a purchaser of the product can be associated with a tag ID, as a product recipient, by communication between a terminal of the purchaser of the product and the tag.

In the foregoing embodiments, the e-commerce application may be structured so that one or a plurality of the functions of the tag management server 5 and the application server 6 will be implemented by the customer terminal 2, the laundry shop terminal 4, or the e-commerce company terminal 3. In short, one or a plurality of the functions of the tag management server 5 and the application server 6 can be implemented as a native application.

In addition, one or a plurality of the functions of the tag management server 5 may be implemented by the application server 6, and one or a plurality of the functions of the application server 6 may be implemented by the tag management server.

The present invention is related to Japanese Patent Application No. 2021-052161 filed with the Japan Patent Office on March 25, 2021, the entire contents of which are incorporated into this specification by reference.

## Claims

1. An information processing device comprising:
a storage configured to store information about a product and identification information of a radio tag that is attached to the product; and
a control unit configured to, when receiving the identification information of the radio tag attached to the product, from a product recipient terminal held by a product recipient who obtains the product, associate information about the product recipient with the identification information of the radio tag,
wherein the control unit is further configured to, when the information about the product recipient is associated with the identification information of the radio tag, control so that the information about the product, which is stored in the storage, can be provided to the product recipient terminal.

2. The information processing device according to claim 1, wherein, in a case in which the product is transferred from a first product recipient to a second product recipient, the control unit is configured to associate information about the second product recipient with the identification information of the radio tag, when receiving information that designates the second product recipient as a next product recipient, from a product recipient terminal held by the first product recipient.

3. The information processing device according to claim 1 or 2, wherein the control unit is further configured to associate information about a previous product recipient of the product with the identification information of the radio tag.

4. The information processing device according to any one of claims 1 to 3, wherein the product recipient includes a person who purchases the product by electronic commerce, from a product seller that provides the product.

5. The information processing device according to any one of claims 1 to 4, wherein the radio tag is a tag that operates by obtaining energy from radio waves of one or a plurality of certain frequencies present in its surroundings.

6. An information processing system comprising:
an information processing device; and
a product recipient terminal being capable of communicating with the information processing device and being held by a product recipient who obtains a product,
the information processing device comprising:
a storage configured to store information about the product and identification information of a radio tag that is attached to the product; and
a control unit configured to, when receiving the identification information of the radio tag attached to the product, from the product recipient terminal, associate information about the product recipient with the identification information of the radio tag,
wherein the control unit is further configured to, when the information about the product recipient is associated with the identification information of the radio tag, control so that the information about the product, which is stored in the storage, can be provided to the product recipient terminal.

7. A method for processing information between an information processing device and a product recipient terminal, the product recipient terminal being capable of communicating with the information processing device and being held by a product recipient who obtains a product,
preliminarily storing, by the information processing device, information about the product and identification information of a radio tag that is attached to the product,
transmitting, by the product recipient terminal, the identification information of the radio tag attached to the product, to the information processing device,
associating, by the information processing device, information about the product recipient with the identification information of the radio tag, when receiving the identification information of the radio tag attached to the product, and
controlling, by the information processing device, so that the information about the product, which is preliminarily stored, can be provided to the product recipient terminal.

8. A program configured to cause a computer to execute a predetermined method in an information processing device, the information processing device being capable of communicating with a product recipient terminal held by a product recipient who obtains a product,
the method comprising:
causing a storage to store information about the product and identification information of a radio tag that is attached to the product;
associating information about the product recipient with the identification information of the radio tag, when the identification information of the radio tag attached to the product is received from the product recipient terminal; and
controlling so that the information about the product, which is stored in the storage, can be provided to the product recipient terminal, when the information about the product recipient is associated with the identification information of the radio tag.
